# EUROPEAN PATENT APPLICATION

(11) **EP 4 350 907 A1**
(43) Date of publication of application: **10.04.2024**
(21) Application number: 22811371.8
(22) Date of filing: 26.05.2022
(51) Int. Cl.: H01S 3/113, G02F 1/09, H01S 3/02, H01S 3/106

(54) **Q-SWITCHED STRUCTURE AND METHOD FOR MANUFACTURING Q-SWITCHED STRUCTURE**

(30) Priority: 28.05.2021 JP 2021090575
(71) Applicant: SHIN-ETSU CHEMICAL CO., LTD., Tokyo 1000005 (JP); NATIONAL UNIVERSITY CORPORATION TOYOHASHI UNIVERSITY OF TECHNOLOGY, Toyohashi-shi, Aichi 441-8580 (JP)
(72) Inventor: WATANABE, Toshiaki, Annaka-shi, Gunma 379-0195 (JP); GOTO, Taichi, Sendai-Shi, Miyagi (JP); INOUE, Mitsuteru, Toyohashi-shi, Aichi 441-8580 (JP)
(74) Representative: Mooser, Sebastian Thomas
(86) International application number: PCT/JP2022/021475
(87) International publication number: WO 2022/250101

(57) **Abstract**

The present invention provides a Q-switch structure including a solid-state laser medium and a magneto-optical material. The solid-state laser medium and the magneto-optical material are joined and integrated, a first anti-reflecting film for adhesive is formed on a surface of the solid-state laser medium, and a second anti-reflecting film for adhesive is formed on a surface of the magneto-optical material. The first anti-reflecting film for adhesive on the solid-state laser medium and the second anti-reflecting film for adhesive on the magneto-optical material are bonded via a translucent material having a transparency at a laser oscillation wavelength of laser oscillated from the solid-state laser medium. This provides the Q-switch that contributes to the miniaturization of a laser apparatus and has high beam quality.

## Description

### TECHNICAL FIELD

The present invention relates to a Q-switch structure and a method of producing a Q-switch structure.

### BACKGROUND ART

For laser application devices such as optical measurement and magneto-optical recording, a laser medium as a light source has faced a challenge recently in higher output and miniaturization. From the viewpoint of miniaturization and higher output, a Q-switch with a magneto-optical material (also referred to as "MO material") as a transmitting mechanism attracts attention.

A laser apparatus in which a first resonant mirror, a solid-state laser material, a Q-switch, and a second resonant mirror are arranged sequentially is known as the laser apparatus having the Q-switch. Consequently, the laser apparatus is known, in which the solid-state laser material and the Q-switch are arranged between a pair of resonant mirrors configured with the first resonant mirror and the second resonant mirror.

Non Patent Document 1 discloses a compact laser apparatus in which a solid-state laser material and a Q-switch are arranged between a pair of resonant mirrors, but the Q-switch is a passive Q-switch utilizing a saturable phenomenon and is uncontrollable actively.

Non Patent Document 2 discloses a technique to control a Q-switch actively utilizing an electro-optical effect. However, a solid-state laser material has a thickness of 0.5 mm, whereas a Q-switch has a thickness of 5 mm, making the Q-switch an obstacle to the miniaturization of a laser apparatus.

Non Patent Document 3 discloses a technique to control a Q-switch actively utilizing an acousto-optical effect, however, the Q-switch has more thickness of 32 mm, making the Q-switch an obstacle to the miniaturization of a laser apparatus.

In a conventional technique, an actively controllable Q-switch makes the Q-switch larger, consequently, the Q-switch is an obstacle to the miniaturization of a laser apparatus. For that reason, achieving both miniaturizing the laser apparatus and activating the Q-switch is desired.

Patent Document 1 discloses a technique to activate a Q-switch within the limitation that does not interfere with the miniaturization of a laser apparatus. In this apparatus, a solid-state laser material and the Q-switch are arranged between a pair of resonant mirrors and further configure the Q-switch with a combination of a film having a magneto-optic effect and a magnetic flux generator. Furthermore, a Q-switch solid-state laser apparatus emits a pulsed laser, when an excitation light enters a solid-state laser material, and a pulse is applied to a magnetic flux generator.

### CITATION LIST

### PATENT LITERATURE

Patent Document 1: JP 2017-79283 A

### NON PATENT LITERATURE

Non Patent Document 1: T.Taira, M.Tsunekane, K.Kanehara, S.Morishima, N.Taguchi and A. Sugiura: "7. Promise of Giant Pulse Micro-Laser for Engine Ignition", Journal of Plasma and Fusion Research, Vol. 89, No.4, pp.238-241(2013)
Non Patent Document 2: T.Taira, and T.Kobayashi: "Q-Switching and Frequency Doubling of Solid-State Lasers by a Single Intracavity KTP Crystal", IEEE Journal of Quantum Electronics of Vol. 30, No.3, pp.800-804(1994)
Non Patent Document 3: Gooch & Housego Co.Ltd., Product number 1-QS041-1, 8C10G-4-GH21

### SUMMARY OF INVENTION

### TECHNICAL PROBLEM

A Q-switch using a magneto-optical (MO) mechanism is described in Patent Document 1 as above-described. Considering the miniaturization of a laser apparatus, a smaller gap between a solid-state laser medium and the magneto-optical mechanism is desired. In FIG. 13 of Patent Document 1, an integrated structure configured with the solid-state laser medium and a magneto-optical film, for example, is proposed. However, a specific integration method is not proposed.

In addition, the Q-switch using the magneto-optical mechanism has the following challenges: oscillation generated by activation of a magnetic switch (generated by magnetic flux change); an optical resonance between the magneto-optical mechanism and the solid-state laser medium; output instability due to changes in magnetic domain pattern caused by strain due to fixed discrepancy in magneto-optical materials; dispersion of a switching speed; degradation of the switching speed due to the increase of a resonance wavelength caused by a space generated between the magneto-optical mechanism and the solid-state laser medium.

The present invention has been made in view of the above-described problem. An object of the present invention is to provide a Q-switch structure that contributes to the miniaturization of a laser apparatus and has high beam quality.

### SOLUTION TO PROBLEM

To achieve the object, the present invention provides a Q-switch structure comprising:
a solid-state laser medium; and
a magneto-optical material, wherein
the solid-state laser medium and the magneto-optical material are joined and integrated;
a first anti-reflecting film for adhesive is formed on a surface of the solid-state laser medium;
a second anti-reflecting film for adhesive is formed on a surface of the magneto-optical material; and
the first anti-reflecting film for adhesive on the solid-state laser medium and the second anti-reflecting film for adhesive on the magneto-optical material are bonded via a translucent material having transparency at a laser oscillation wavelength of laser oscillated from the solid-state laser medium.

Such a Q-switch structure has the solid-state laser medium and the magneto-optical material being joined and integrated, consequently, such a structure can be a compact Q-switch structure. In addition, the Q-switch structure having high beam quality can be made because the solid-state laser medium and the magneto-optical material are bonded via the translucent material. In other words, the degradation of optical characteristics due to strain caused by joining can be mitigated. In the present invention, the integrated combination of the solid-state laser medium and the magneto-optical material is referred to as the Q-switch structure. The Q-switch structure can function as a Q-switch in combination with a magnetic flux generator.

Furthermore, the translucent material is preferably an organic adhesive with a Shore D hardness of 80 or less or an inorganic translucent material.

In the inventive Q-switch structure, when an organic adhesive having a Shore D hardness of 80 or less is used as the translucent material, the strain caused by joining the solid-state laser medium and the magneto-optical material can be mitigated and high beam quality can be achieved. Additionally, when an inorganic translucent material is used as the translucent material, high beam quality can be obtained due to the suppression of degradation caused by a photo effect.

Moreover, the organic adhesive is preferably any one of silicone resin, silicone-modified epoxy resin, and epoxy resin.

Such organic adhesives have low Shore D hardness and can decrease the strain caused by the joining of the solid-state laser medium and the magneto-optical material efficiently. Furthermore, the adhesives have excellent weatherability and light resistance.

Additionally, the inorganic translucent material is preferably a water glass or a glass material including a low melting point glass with a glass transition point of 500°C or less.

These glass materials are stable and have relatively low hardness as the inorganic translucent material, which contributes effectively to mitigating the strain at a joining area between the solid-state laser medium and the magneto-optical material. The glass material also has excellent weatherability and light resistance.

In addition, the transparency of the translucent material at the laser oscillation wavelength has preferably a transmittance of 95 % or more.

In the inventive Q-switch structure, the translucent material having such high transmittance can increase the transparency of the Q-switch.

Furthermore, the magneto-optical material is preferably a bismuth-substituted rare earth iron garnet.

Moreover, the solid-state laser medium is preferably selected from any one of ceramics selected from the group comprised of Y₃Al₅O₁₂, Gd₃Ga₅O₁₂, and YVO₄ doped with any one selected from the group comprised of Nd, Yb, and Cr.

These materials can be preferably used for the inventive Q-switch structure.

Additionally, the present invention provides a Q-switch solid-state laser apparatus in which the Q-switch structure and a magnetic flux generator are arranged between a pair of resonant mirrors.

Such a Q-switch solid-state laser apparatus having the inventive Q-switch structure can be a compact Q-switch structure with high beam quality because the solid-state laser medium and the magneto-optical material are bonded and integrated via a translucent material having the transparency at a laser oscillation wavelength.

In addition, the present invention provides a method of producing a Q-switch structure comprising a solid-state laser medium and a magneto-optical material in which the solid-state laser medium and the magneto-optical material are joined and integrated, the method comprising the steps of:
preparing the solid-state laser medium and the magneto-optical material;
forming a first anti-reflecting film for adhesive on a surface of the solid-state laser medium;
forming a second anti-reflecting film for adhesive on a surface of the magneto-optical material; and
bonding the first anti-reflecting film for adhesive on the solid-state laser medium and the second anti-reflecting film for adhesive on the magneto-optical material via a translucent material having a transparency at a laser oscillation wavelength of laser oscillated from the solid-state laser medium.

Such a method of producing the Q-switch structure enables the solid-state laser medium and the magneto-optical material to join and integrate with ease. Additionally, since the solid-state laser medium and the magneto-optical material are bonded via the translucent material, the Q-switch structure can be compact and have high beam quality.

In addition, the translucent material is preferably an organic adhesive with a Shore D hardness of 80 or less or an inorganic translucent material.

In the inventive method of producing the Q-switch structure, when the organic adhesive having the Shore D hardness of 80 or less is used as the translucent material, the strain caused by joining the solid-state laser medium and the magneto-optical material can be mitigated, and high beam quality can be obtained. Additionally, when the inorganic translucent material is used as the translucent material, high beam quality can be obtained due to the suppression of degradation caused by a photo effect.

Furthermore, the organic adhesive is any one of silicone resin, silicone-modified epoxy resin, and epoxy resin.

Such organic adhesives have low Shore D hardness and can decrease the strain caused by the joining the solid-state laser medium and the magneto-optical material more efficiently.

Moreover, the inorganic translucent material is preferably a water glass or a glass material including a low melting point glass with a glass transition point of 500°C or less.

These glass materials are stable and have relatively low hardness as the inorganic translucent material, which contributes effectively to mitigating the strain at a joining area between the solid-state laser medium and the magneto-optical material.

Additionally, the glass material is preferably bonded to the first anti-reflecting film for adhesive and the second anti-reflecting film for adhesive by thermal diffusion bonding or by close bonding under a vacuum.

Such thermal diffusion bonding or close bonding under a vacuum can be used to easily join the solid-state laser medium and the magneto-optical material via the glass material.

In addition, the transparency of the translucent material at the laser oscillation wavelength preferably has a transmittance of 95 % or more.

By using the translucent material with such high transmittance, the transparency of the Q-switch structure can also be increased.

Moreover, the magneto-optical material is preferably a bismuth-substituted rare earth iron garnet.

Furthermore, the solid-state laser medium is preferably selected from any one of ceramics selected from the group comprised of Y₃Al₅O₁₂, Gd₃Ga₅O₁₂, and YVO₄ doped with any one selected from the group comprised of Nd, Yb, and Cr.

These materials can be suitably used for the method of producing the inventive Q-switch structure.

Additionally, the present invention provides a method of producing a Q-switch solid-state laser apparatus comprising:
producing the Q-switch structure by the method of producing a Q-switch structure; and
producing the Q-switch solid-state laser apparatus by arranging the Q-switch structure and a magnetic flux generator between a pair of resonant mirrors.

Such an inventive method of producing the Q-switch solid-state laser apparatus can be a compact Q-switch solid-state laser apparatus and the Q-switch solid-state laser apparatus with high beam quality because the solid-state laser medium and the magneto-optical material are bonded via a translucent material.

### ADVANTAGEOUS EFFECTS OF INVENTION

With an inventive Q-switch structure, since a solid-state laser medium and a magneto-optical material are joined and integrated, a Q-switch structure can be compact. In addition, the Q-switch structure having high beam quality can be made because the solid-state laser medium and the magneto-optical material are bonded via the translucent material. In other words, the degradation of optical characteristics due to strain caused by joining can be mitigated. Thus, the following can be made: a suppression of a vibration, a prevention of an optical resonance between the magneto-optical material and the solid-state laser medium, and an improvement of the switching speed due to the shortening of a resonance wavelength. The inventive method of producing the Q-switch structure can produce such a Q-switch structure with ease.

### BRIEF DESCRIPTION OF DRAWINGS

FIG. 1 is a schematic view illustrating an example of a structure of a Q-switch structure schematically according to the present invention.
FIG. 2 is a cross-sectional view illustrating an example of a structure of a Q-switch structure schematically according to the present invention.
FIG. 3 is a cross-sectional view illustrating an example (a first aspect) of a structure of a Q-switch structure schematically according to the present invention.
FIG. 4 is a cross-sectional view illustrating an example (a second aspect) of a structure of a Q-switch structure schematically according to the present invention.
FIG. 5 is a cross-sectional view illustrating an example (a third aspect) of a structure of a Q-switch structure schematically according to the present invention.
FIG. 6 is a cross-sectional view illustrating an example of a Q-switch solid-state laser apparatus having a Q-switch structure schematically according to the present invention.
FIG. 7 is a flowchart illustrating an example of a method of producing a Q-switch structure according to the present invention.

### DESCRIPTION OF EMBODIMENTS

Hereinafter, the present invention will be described with reference to the drawings. However, the present invention is not limited thereto.

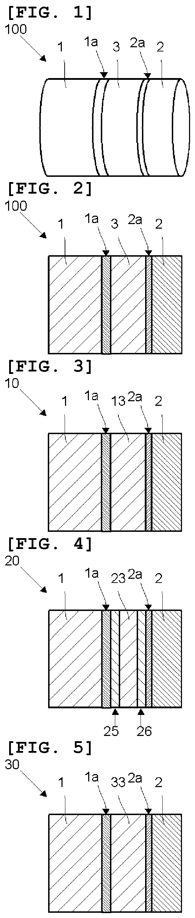

An example of a structure of an inventive Q-switch structure is described with reference to FIG. 1 and FIG. 2. FIG. 1 illustrates a schematic view of a structure of a Q-switch structure. FIG. 2 illustrates a cross-sectional view of the structure.

An inventive Q-switch structure 100 includes a solid-state laser medium 1 and a magneto-optical material 2, in which the solid-state laser medium 1 and the magneto-optical material 2 are joined and integrated. In addition, a first anti-reflecting film for adhesive 1a is formed on a surface of the solid-state laser medium 1 and a second anti-reflecting film for adhesive 2a is formed on a surface of the magneto-optical material 2. Furthermore, the first anti-reflecting film for adhesive 1a on the solid-state laser medium 1 and the second anti-reflecting film for adhesive 2a on the magneto-optical material 2 are bonded via a translucent material 3 having a transparency at a laser oscillation wavelength of laser oscillated from the solid-state laser medium 1.

Such a Q-switch structure has the solid-state laser medium 1 and the magneto-optical material 2 being joined and integrated, consequently, such a structure can be a compact Q-switch structure 100. In addition, the Q-switch structure having high beam quality can be made because the solid-state laser medium 1 and the magneto-optical material 2 are bonded via the translucent material 3.

Moreover, the transparency of the translucent material 3 preferably has a transmittance of 95 % or more (insertion loss of 0.2 dB or less) at the laser oscillation wavelength, the transmittance of 98 % or more (insertion loss of 0.1 dB or less) is further preferable. Selecting a type and a thickness of the translucent material having such a transmittance can be done with ease. Furthermore, the transmittance also depends on the thickness of the material, and the thicker the material, the lower the transmittance.

A definition of the transmittance in the description of the present invention is as follows: "workpiece" here refers to an object through which light (electromagnetic waves) transmits.

The transmittance (%) = (a quantity of light transmitted through the workpiece / the quantity of light without the workpiece) ×100

The insertion loss (dB)= -10×log₁₀ (the quantity of light when the workpiece is transmitted / the quantity of light without the workpiece)

Additionally, in the inventive Q-switch structure 100, a material that can be used as the solid-state laser medium can be used as a material for the solid-state laser medium 1. Among them, the medium is preferably selected from any one of ceramics selected from the group comprised of Y₃Al₅O₁₂, Gd₃Ga₅O₁₂, and YVO₄ doped with any one selected from the group comprised of Nd, Yb, and Cr. Moreover, in the inventive Q-switch structure 100, a material that can be used as the magneto-optical material can be used as a material for the magneto-optical material 2. Among them, the material is preferably a bismuth-substituted rare earth iron garnet.

Furthermore, in the inventive Q-switch structure 100, a material for the first anti-reflecting film for adhesive 1a and the second anti-reflecting film for adhesive 2a include such as two-layer structure with a TiO₂ layer or a Ta₂O₅ layer formed as a first layer and a SiO₂ layer further formed on a surface of the solid-state laser medium 1 and magneto-optical material 2. These anti-reflecting films for adhesive function as films and suppress an optical reflection at an interface between different materials.

In addition, in the present invention, the translucent material 3 illustrated in FIGS. 1 and 2 is preferably an organic adhesive with a Shore D hardness of 80 or less or an inorganic translucent material. Hereinafter, a case, in which the translucent material 3 is the organic adhesive with the Shore D hardness of 80 or less, is described as a first aspect. Moreover, cases, in which the translucent material 3 is the inorganic translucent material, are described as a second aspect and a third aspect. As for common matters with FIGS. 1 and 2, redundant descriptions are omitted.

### [First aspect]

FIG. 3 shows a cross-sectional view illustrating an example (a first aspect) of a structure of a Q-switch structure according to the present invention. In this aspect, a solid-state laser medium 1 and a magneto-optical material 2 are bonded via an organic adhesive 13 with Shore D hardness of 80 or less as a translucent material. In this case, a translucent material 13, which is an organic adhesive, is preferably any one of silicone resin, silicone-modified epoxy resin, and epoxy resin.

Such a Q-switch structure 10 uses the organic adhesive 13 with the Shore D hardness of 80 or less, which is a relatively low hardness, as the translucent material. Consequently, the structure can mitigate the strain caused by joining the solid-state laser medium and the magneto-optical material and achieve high beam quality. A thickness of a layer of the organic adhesive 13 is preferably 0.005 to 0.040 mm (5 to 40 um). The thickness of the organic adhesive 13 having such thickness can mitigate strain and maintain high transparency. In particular, depending on the material, the thickness described above enables a transmittance of 95 % or more in a layer of the organic adhesive 13 at a laser oscillation wavelength of around 1064 nm.

### [Second and Third aspects]

Then, aspects (a second aspect and a third aspect) where a translucent material 3 is an inorganic translucent material are described. In these cases, a solid-state laser medium 1 and a magneto-optical material 2 are joined via the translucent material 3 (in these cases, an inorganic translucent material) as shown in FIGS. 1 and 2. In particular, the inorganic translucent material is preferably a water glass or a glass material including a low melting point glass with a glass transition point of 500°C or less. Hereinafter, "the low melting point glass with the glass transition point of 500°C or less" may be simply referred to as "the low melting point glass". Incidentally, the glass transition point is more preferably 400°C or less.

Hence, instead of using the organic adhesive for joining the solid-state laser medium 1 and the magneto-optical material 2 as the first aspect described above, the inorganic translucent material may be used in the present invention. The advantages of using the inorganic translucent material as the translucent material 3 are as follows. In recent years, a light oscillated from the solid-state laser apparatus including the Q-switch has a beam having a power exceeding 1 mJ with a diameter of around 0.3 mm, and an output has increased further. When even greater power than before is transmitted through a joining interface hereafter, and supposing that the translucent material 3 is the organic adhesive, it is concerned that a joining part of an organic joint may break and affect a surrounding area. Under such circumstances, substituting an inorganic material for the joining material between the solid-state laser medium 1 and the magneto-optical material 2 resolves the concern coming from such a high output. However, on this occasion, a light beam may change in quality due to the joining strain depending on the type of the inorganic material. To prevent this effect, a strain relaxation layer can be interposed in advance at the joining interface.

As the inorganic translucent material, it is preferable to use the translucent material having a linear expansion coefficient of a value between the linear expansion coefficient of the solid-state laser medium 1 and the linear expansion coefficient of the magneto-optical material 2.

### <Second aspect>

In a Q-switch structure 20 of the second aspect shown in FIG. 4, a solid-state laser medium 1 and a magneto-optical material 2 are bonded via an inorganic translucent material 23 as a translucent material. Moreover, a first anti-reflecting film for adhesive 1a on a solid-state laser medium 1 and the inorganic translucent material 23 are bonded via a strain relaxation layer 25. Furthermore, a second anti-reflecting film for adhesive 2a on a magneto-optical material 2 and the inorganic translucent material 23 are bonded via a strain relaxation layer 26 respectively.

### <Third aspect>

In a Q-switch structure 30 of the third aspect shown in FIG. 5, a first anti-reflecting film for adhesive 1a on a solid-state laser medium 1 and a second anti-reflecting film for adhesive 2a on a magneto-optical material 2 are directly bonded via an inorganic translucent material 33 as a translucent material. Furthermore, a solid-state laser medium 1 and a magneto-optical material 2 sandwich the inorganic translucent material 33, and the anti-reflecting films 1a and 2a.

The inorganic translucent materials are exemplified by such glass materials including a water glass or a low melting point glass, or such as a borosilicate glass, a quartz glass, and a paramagnetic garnet.

Among them, the glass material including the water glass or the low melting point glass can be applied to both the second aspect and the third aspect. The borosilicate glass, the quartz glass, and the paramagnetic garnet are preferable for the second aspect. In the case of the second aspect, the glass material including the water glass or the low melting point glass can be used for strain relaxation layers 25, and 26. Consequently, a material in contact with the solid-state laser medium 1 (the first anti-reflecting film for adhesive 1a on the solid-state laser medium 1) and a material in contact with the magneto-optical material 2 (the second anti-reflecting film for adhesive on the magneto-optical material 2) are both preferably the glass material including the water glass or the low melting point glass. These glass materials are stable and have relatively low hardness as the inorganic translucent material, which contributes effectively to mitigating the strain at a joining area between the solid-state laser medium and the magneto-optical material.

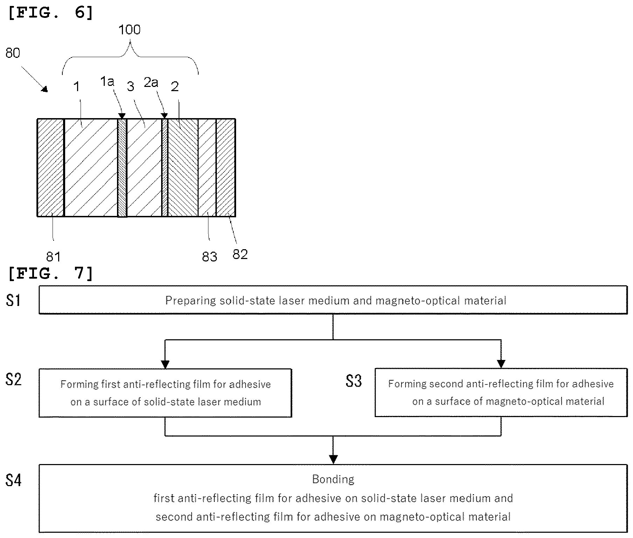

The Q-switch structures 100, 10, 20, and 30 function as a Q-switch in combination with the magneto-optical material 2 and a magnetic flux generator. FIG. 6 shows an example of the structure of a Q-switch solid-state laser apparatus. In FIG. 6, the Q-switch structure 100 of FIGS. 1 and 2 is illustrated as a representative. In a Q-switch solid-state laser apparatus 80, the Q-switch structure 100, described above, and a magnetic flux generator 83 are arranged between a pair of resonant mirrors (a first resonant mirror 81 and a second resonant mirror 82). FIG. 6 illustrates an example in which all of these structures are joined and integrated. However, it is only required that the solid-state laser medium 1 and the magneto-optical material 2, which configure the Q-switch structure 100, are joined and integrated in the present invention, other structural materials can be arranged appropriately. For example, the magnetic flux generator can include a combination of a permanent magnet and an exciting coil and the exciting coil can be arranged around the permanent magnet.

### [Method of producing Q-switch structure]

Then, an inventive method of producing a Q-switch structure is described. The inventive method of producing the Q-switch structure includes a solid-state laser medium 1 and a magneto-optical material 2 as shown in FIG. 1 and FIG. 2, in which the solid-state laser medium 1 and the magneto-optical material 2 are joined and integrated. Furthermore, the inventive method includes the steps of, preparing the solid-state laser medium 1 and the magneto-optical material 2, forming a first anti-reflecting film for adhesive 1a on a surface of the solid-state laser medium 1, and forming a second anti-reflecting film for adhesive 2a on a surface of the magneto-optical material 2. Moreover, the method further includes a step of bonding the first anti-reflecting film for adhesive 1a on the solid-state laser medium 1 and the second anti-reflecting film for adhesive 2a on the magneto-optical material 2 via a translucent material 3 having a transparency at a laser oscillation wavelength of laser oscillated from the solid-state laser medium 1.

Referring to FIG. 7, the inventive method of producing the Q-switch structure is described in more detail. Firstly, the solid-state laser medium 1 and the magneto-optical material 2 are prepared (Step S1) as shown in S1 of FIG. 7. The material above described can be used for the solid-state laser medium 1 and the magneto-optical material 2 both prepared here.

Secondly, the first anti-reflecting film for adhesive 1a is formed on a surface of the solid-state laser medium 1 (Step S2) as shown in S2 of FIG. 7. Then, the second anti-reflecting film for adhesive 2a is formed on a surface of the magneto-optical material 2 (Step S3) as shown in S3 of FIG. 7. The material above described can be used for these anti-reflecting films for adhesive. The antireflective film can be formed by such as ion-assisted electron beam vacuum deposition, and ion beam sputtering. The film is configured by forming a TiO₂ layer or Ta₂O₅ layer on a surface of the material as a first layer and on top of that, forming a SiO₂ layer as a second layer. Incidentally, the order of Steps S2 and S3 is irrelevant.

Then, the first anti-reflecting film for adhesive 1a on the solid-state laser medium 1 and the second anti-reflecting film for adhesive 2a on the magneto-optical material 2 are bonded (Step S4) as shown in S4 of FIG. 7. At this stage, the translucent material having a transparency at a laser oscillation wavelength of laser oscillated from the solid-state laser medium 1 is used.

For a bonding step in Step S4, an organic adhesive having a Shore D hardness of 80 or less is preferably used as the translucent material (the first aspect shown in FIG. 3), or an inorganic translucent material is preferably used (the second aspect shown in FIG. 4, the third aspect shown in FIG. 5).

### [First aspect]

For an organic adhesive 13 in a first aspect, any one of silicone resin, silicone-modified epoxy resin or epoxy resin can be used. By action of ordinary organic adhesive, a first anti-reflecting film for adhesive 1a on a solid-state laser medium 1 and a second anti-reflecting film for adhesive 2a on a magneto-optical material 2 can be bonded. As a result, a Q-switch structure 10 shown in FIG. 3 can be produced. When the organic adhesive having a Shore D hardness of 80 or less is used as the translucent material, a strain caused by joining the solid-state laser medium 1 and the magneto-optical material 2 can be reduced and a high beam quality can be obtained with a simple and easy method.

### [Second aspect, Third aspect]

Bonding methods using inorganic translucent materials have a wide variety and known methods are applicable. In particular, the bonding described below is preferable.

### <Second aspect>

In Second aspect, a borosilicate glass, a quartz glass, and a paramagnetic garnet are usable for an inorganic translucent material 23 as described above. On this occasion, as described above, a glass material including a water glass or a low melting point glass is preferably used as strain relaxation layers 25 and 26. A method of producing a Q-switch structure 20 in this aspect will be described more specifically.

A case where Bi-RIG is used as a magneto-optical material 2 is described as an example. To begin with, the magneto-optical material (Bi-RIG) 2 and the inorganic translucent material 23 are bonded. The inorganic translucent material 23 used in this case has preferably a linear expansion coefficient of a value between Bi-RIG and a solid-state laser medium. In this case, the inorganic translucent material 23 itself is envisaged to be formed by the water glass or low melting point glass, however, such a case enables to adoption of the water glass or the low melting point glass for strain relaxation layers 25 and 26. Consequently, a structure is similar to that of Third aspect.

In the case of Second aspect, an antireflective film (a metal oxide film) 2a is formed on Bi-RIG, which is magneto-optical material 2, by an electron beam evaporation method in advance. Then, the water glass layer or the low melting point glass layer, which is the strain relaxation layer 26, can be formed on top of the layer. For the water glass, heating an aqueous solution of sodium silicate can form a viscous liquid which can then be applied to a surface of the medium to form the water glass. Furthermore, the low melting point glass layer can be formed by chemical vapor deposition such as an electron beam evaporation method. In this instance, the glass materials conventionally used such as PbO, B₂O₃, TeO₂, and Bi₂O₃ as principal ingredients can be used as the low melting point glass to be formed. In this case, the water glass or the low melting point glass is preferably formed to have a thickness of 1×10⁻8 m to 1×10⁻5 m (namely 10 nm to 10 um), and further preferably formed to have a thickness of 0.010 to 0.100 mm. The water glass layer or the low melting point glass layer, which is the strain relaxation layer 26, having a thickness of 1×10⁻⁸ m or more can provide sufficient joining strength. Moreover, a thickness of 1×10⁻⁵ m or less can suppress degradation of a transmittance of light.

Then, a joining surface between the inorganic translucent material 23 and the water glass or the low melting point glass is bonded, and heat treated. The water glass or the low melting point glass is strain relaxation layer 26, formed on the Bi-RIG which is the magneto-optical material 2. Consequently, the inorganic translucent material 23 and Bi-RIG which is the magneto-optical material 2 are formed into a single piece. When a temperature of joining is low, thermal stress toward the joining surface can be reduced, thus melting and fixing at the lowest possible temperature is preferable. The joining temperature can be the glass transition point +30°C or lower.

Furthermore, the water glass or the low melting point glass which is the strain relaxation layer 25 is formed on the inorganic translucent material 23. This method can be performed in the same way as above.

Then, the water glass or the low melting point glass, which is the strain relaxation layer 25, and the solid-state laser medium 1 are joined. The method of joining is similar to the method used in manufacturing a wafer having a SOI structure of a semiconductor, in which the joining strength may be considered to be Van der Waals force, hydrogen bond, or covalent bond. Sufficient joining strength is obtained by hydrophilic treatment on both joining surfaces, then by bonding the joining surfaces, and then by applying heat treatment.

More specifically, the water glass or the low melting point glass, which is the strain relaxation layer 25, and the solid-state laser medium 1 can be joined as follows. Firstly, a workpiece surface is cleaned and hydrophilic treated. Although common wet cleaning is effective for this cleaning, it is more effective to conduct in combination with a short wavelength ultraviolet ray radiation process (UV process) or plasma process. Also, it is effective for the hydrophilic treatment to use an ammonia-hydrogen peroxide mixture (mixed solution of ammonia water, hydrogen peroxide solution, and pure water), a diluted solution of nitric acid or hydrochloric acid, or a solution made by adding hydrogen peroxide solution to these diluted solutions. Then, cleaning with pure water is performed, and a hydrophilic treatment solution is removed. In this way, pretreated joining surfaces are faced each other, and then joined. It is desirable to apply a liquid including mainly a polar molecule, such as pure water, to the joining surfaces and then bond it via the liquid to make joining easier. Subsequently, a jointed body is naturally dried or vacuum dried, then fixed by weak joining strength. Moreover, sufficient joining strength can be obtained by heat treatment at a temperature of about 80 to 200°C.

### <Third aspect>

In a third aspect, a first anti-reflecting film for adhesive 1a on a solid-state laser medium 1 and a second anti-reflecting film for adhesive 2a on a magneto-optical material 2 are directly bonded via an inorganic translucent material 33 as a translucent material as shown in FIG. 5. In this method, when the solid-state laser medium 1 is a garnet material such as Nd:YAG, a glass material including a water glass or a low melting point glass, in which an expansion coefficient is close, is preferably used as an inorganic translucent material 33. The direct joining method can be made by the same method as in the joining the water glass or the low melting point glass, which are the strain relaxation layers 25 and 26 in the second aspect above, with the solid-state laser medium 1 and/or magneto-optical material 2.

As described above, in both cases in the second aspect and the third aspect, the glass material is preferably bonded with the first anti-reflecting film for adhesive or the second anti-reflecting film for adhesive by the thermal diffusion bonding or the close bonding under a vacuum.

By using a Q-switch structure produced by such a method of producing the Q-switch structure, a Q-switch solid-state laser apparatus, in which the Q-switch structure and a magnetic flux generator are arranged between a pair of resonant mirrors, can be produced.

### EXAMPLE

Hereinafter, the present invention will be specifically described with reference to Examples and Comparative Examples. However, the present invention is not limited thereto.

### (Examples 1-1 to 1-8)

As described below, a Q-switch structure 100, shown in FIGS. 1 and 2, was produced.

Firstly, an Nd:YAG was prepared as a solid-state laser medium 1, then a bismuth-substituted rare earth iron garnet ((Rbi)₃Fe₅O₁₂: commonly known as Bi-RIG) was prepared as a magneto-optical material 2 (Step S1 in FIG. 7).

Secondly, an anti-reflecting film for air (materials were Ta₂O₅ on a medium surface / SiO₂ on a further upper layer) was formed on one surface of the solid-state laser medium 1. Then, an antireflective film for adhesive (materials were TiO₂ on a surface of medium / SiO₂ on a further upper layer) was formed on another side of the surface (the surface to be a joining surface) (Step S2 in FIG. 7). Moreover, the antireflective film for adhesive (materials were TiO₂ on a medium surface / SiO₂ on a further upper layer) was formed on one surface (the surface to be bonded) of a magneto-optical material 2. Furthermore, the antireflective film for air (materials were Ta₂O₅ on a medium surface / SiO₂ on a further upper layer) was formed on another side of the surface (Step S3 in FIG. 7).

Thirdly, a bonding was performed by using an organic adhesive (translucent material 13 as an organic adhesive in FIG. 3) as a translucent material 3 (Step 4 in FIG. 7). In this case, the bonding was performed by using organic adhesives having different Shore D harnesses after cured. Adhesives used were KJR9022, LPS5400, LPS5547F, KJR632 (all produced by Shin-Etsu Chemical Co., Ltd.), Epo-tek OD2002, Epo-tek 302-3M, Epo-tek 353ND, Epo-tek 301 (all produced by Epoxy Technology, Inc.).

A strain caused by joining was evaluated by measuring an extinction ratio by: arranging a joining workpiece between a polarizer and an analyzer in an optical system; extracting collimated light from the laser source and then introducing the light into a light detector through the polarizer/analyzer of the optical system; entering the light on a surface of the solid-state laser medium 1; and measuring an emitting light from the magneto-optical material 2. The adhesive used, Shore D hardness, and light transmittances at 1064 nm are shown in TABLE. 1.

**[TABLE 1]**

| | Example 1-1 | Example 1-2 | Example 1-3 | Example 1-4 | Example 1-5 | Example 1-6 | Example 1-7 | Example 1-8 |
|---|---|---|---|---|---|---|---|---|
| Type of adhesive | KJR9022 | LPS5400 | LPS5547F | Epo-tek OD2002 | KJR632 | Epo-tek 302-3M | Epo-tek 353ND | Epo-tek 301 |
| Transmittance (%) at laser oscillation wavelength of 1064 nm | ≥98 | ≥98 | ≥95 | ≥98 | ≥98 | ≥95 | ≥98 | ≥97 |
| Shore D hardness | 20 | 30 | 40 | 69 | 75 | 80 | 85 | 85 |
| Extinction ratio of joining workpiece (dB) | 44 | 44 | 41 | 43 | 42 | 38 | 32 | 31 |

In EXAMPLES 1-1 to 1-8, the compact Q-switch structures with mitigated strain were obtained. In addition, the extension ratio may be 30 dB or higher. However, when a value of which 35 dB or higher is obtainable is defined as a particularly good value with low strain, the particularly good value was obtained in EXAMPLES 1-1 to 1-6. Incidentally, even when optical output was increased, little degradation in output could be obtained by reviewing a joining condition.

### [EXAMPLE 2]

A Q-switch structure 100 illustrated in FIG. 1 and 2 was produced as follows.

Nd:YAG was prepared as a solid-state laser medium 1 and bismuth-substituted rare earth iron garnet ((Rbi)₃Fe₅O₁₂: commonly known as Bi-RIG) was prepared as the magneto-optical material 2 (Step 1 in FIG. 7). Then, an antireflective film for air (TiO₂ is on a surface layer of a medium / SiO₂ is on a further upper surface) is formed on the one surface of the solid-state laser medium 1 and an antireflective film for adhesive (TiO₂ is on a surface layer of a medium / SiO₂ is on a further upper surface) is formed on another side of the surface (a surface to be joining surface) (Step S2 in FIG. 7). Moreover, the antireflective film for adhesive (TiO₂ is on a surface of the magneto-optical material / SiO₂ is on a further upper surface) is formed on one side of a surface (a surface to be a joining surface) of the magneto-optical material 2 and the antireflective film for air (TiO₂ is on another side of the surface of the magneto-optical material / SiO₂ is on further upper surface) is formed on another side of a surface (Step S3 in FIG. 7).

Then, a bonding was performed by using an inorganic translucent material (an inorganic translucent material 33 in FIG. 5) as a translucent material 3, as described below (Step 4 in FIG. 7).

A low melting point glass layer (PbO-ZnO-B₂O₃), which is the inorganic translucent material 33, was formed on the antireflective film for adhesive on the magneto-optical material 2 by a chemical vapor deposition. In this case, a thickness is 0.050 mm. Then, a surface in which the inorganic translucent material 33 was formed on the magneto-optical material 2 and a surface of the solid-state laser medium 1 were cleaned by an ammonia-hydrogen peroxide mixture, and were performed a hydrophilic treatment Then, a cleaning with pure water was performed. Consequently, pretreated joining surfaces were faced and then bonded. Subsequently, a joined body was vacuum-dried and fixed. Then, the surfaces of the inorganic translucent material 33 and the solid-state laser medium 1 were joined by heat treatment at a temperature of 400°C. Consequently, a Q-switch structure 30 shown in FIG. 5 was produced.

The Q-switch structure produced was subjected to being transmitted by laser light as in EXAMPLES 1-1 to 1-8 to evaluate the strain caused by joining and an extinction ratio of 35 dB or higher was obtained. Furthermore, this Q-switch structure was used to be integrated into the Q-switch solid-state laser apparatus that was operated continuously increasing output to 10 mJ, but a time degradation had not been observed.

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

## Claims

1. A Q-switch structure comprising:
a solid-state laser medium; and
a magneto-optical material, wherein
the solid-state laser medium and the magneto-optical material are joined and integrated;
a first anti-reflecting film for adhesive is formed on a surface of the solid-state laser medium;
a second anti-reflecting film for adhesive is formed on a surface of the magneto-optical material; and
the first anti-reflecting film for adhesive on the solid-state laser medium and the second anti-reflecting film for adhesive on the magneto-optical material are bonded via a translucent material having a transparency at a laser oscillation wavelength of laser oscillated from the solid-state laser medium.

2. The Q-switch structure according to claim 1, wherein
the translucent material is an organic adhesive with a Shore D hardness of 80 or less or an inorganic translucent material.

3. The Q-switch structure according to claim 2, wherein
the organic adhesive is any one of silicone resin, silicone-modified epoxy resin, and epoxy resin.

4. The Q-switch structure according to claim 2, wherein
the inorganic translucent material is a water glass or a glass material including a low melting point glass with a glass transition point of 500°C or less.

5. The Q-switch structure according to any one of claims 1 to 4, wherein
the transparency of the translucent material at the laser oscillation wavelength has a transmittance of 95 % or more.

6. The Q-switch structure according to any one of claims 1 to 5, wherein
the magneto-optical material is a bismuth-substituted rare earth iron garnet.

7. The Q-switch structure according to any one of claims 1 to 6, wherein
the solid-state laser medium is selected from any one of ceramics selected from the group comprised of Y₃Al₅O₁₂, Gd₃Ga₅O₁₂, and YVO₄ doped with any one selected from the group comprised of Nd, Yb, and Cr.

8. A Q-switch solid-state laser apparatus comprising:
a Q-switch structure according to any one of claims 1 to 7 and a magnetic flux generator being arranged between a pair of resonant mirrors.

9. A method of producing a Q-switch structure comprising a solid-state laser medium and a magneto-optical material in which the solid-state laser medium and the magneto-optical material are joined and integrated, the method comprising the steps of:
preparing the solid-state laser medium and the magneto-optical material;
forming a first anti-reflecting film for adhesive on a surface of the solid-state laser medium;
forming a second anti-reflecting film for adhesive on a surface of the magneto-optical material; and
bonding the first anti-reflecting film for adhesive on the solid-state laser medium and the second anti-reflecting film for adhesive on the magneto-optical material via a translucent material having a transparency at a laser oscillation wavelength of laser oscillated from the solid-state laser medium.

10. The method of producing the Q-switch structure according to claim 9, wherein
the translucent material is an organic adhesive with a Shore D hardness of 80 or less or an inorganic translucent material.

11. The method of producing the Q-switch structure according to claim 10, wherein
the organic adhesive is any one of silicone resin, silicone-modified epoxy resin, and epoxy resin.

12. The method of producing the Q-switch structure according to claim 10, wherein
the inorganic translucent material is a water glass or a glass material including a low melting point glass with a glass transition point of 500°C or less.

13. The method of producing the Q-switch structure according to claim 12, wherein
the glass material is bonded to the first anti-reflecting film for adhesive and the second anti-reflecting film for adhesive by thermal diffusion bonding or by close bonding under a vacuum.

14. The method of producing the Q-switch structure according to any one of claims 9 to 13, wherein
the transparency of the translucent material at the laser oscillation wavelength has a transmittance of 95 % or more.

15. The method of producing the Q-switch structure according to any one of claims 9 to 14, wherein
the magneto-optical material is a bismuth-substituted rare earth iron garnet.

16. The method of producing the Q-switch structure according to any one of claims 9 to 15, wherein
the solid-state laser medium is selected from any one of ceramics selected from the group comprised of Y₃Al₅O₁₂, Gd₃Ga₅O₁₂, and YVO₄ doped with any one selected from the group comprised of Nd, Yb, and Cr.

17. A method of producing a Q-switch solid-state laser apparatus comprising:
producing the Q-switch structure by the method of producing a Q-switch structure according to any one of claims 9 to 16; and
producing the Q-switch solid-state laser apparatus by arranging the Q-switch structure and a magnetic flux generator between a pair of resonant mirrors.
